# EUROPÄISCHE PATENTSCHRIFT

(11) **EP 4 069 908 B1**
(45) Veröffentlichungstag und Bekanntmachung des Hinweises auf die Patenterteilung: **26.06.2024**
(21) Anmeldenummer: 20811291.2
(22) Anmeldetag: 20.11.2020
(51) Int. Cl.: E02B 17/02, E02D 27/42, E02D 27/52, F03D 13/20, E02D 7/02, E02D 5/48

(54) **WINDKRAFTANLAGENGRÜNDUNGSSTRUKTUR SOWIE VERFAHREN ZUR HERSTELLUNG EINER WINDKRAFTANLAGENGRÜNDUNGSSTRUKTUR**
WIND TURBINE FOUNDATION STRUCTURE, AND METHOD FOR PRODUCING A WIND TURBINE FOUNDATION STRUCTURE
STRUCTURE DE FONDATION D'ÉOLIENNE, ET PROCÉDÉ DE PRODUCTION D'UNE STRUCTURE DE FONDATION D'ÉOLIENNE

(30) Priorität: 05.12.2019 DE 102019133132
(43) Veröffentlichungstag der Anmeldung: 12.10.2022
(73) Patentinhaber: Bartminn, Daniel, 25335 Elmshorn (DE)
(72) Erfinder: Bartminn, Daniel, 25335 Elmshorn (DE)
(74) Vertreter: Lippert Stachow Patentanwälte Rechtsanwälte Part.mbB
(86) Internationale Anmeldenummer: PCT/EP2020/082862
(87) Internationale Veröffentlichungsnummer: WO 2021/110436

(56) Entgegenhaltungen:
- US-A- 3 034 304
- US-A- 3 034 304
- US-A1- 2011 138 720
- US-A1- 2011 138 720
- US-A1- 2014 033 628
- US-A1- 2014 033 628

## Beschreibung

Der Gegenstand betrifft eine Windkraftanlagengründungsstruktur; gemäß Anspruch 1 sowie Verfahren gemäß Anspruch 12 zur Herstellung einer solchen Gründungsstruktur. Windkraftanlagen im Sinne des Gegenstandes können Windturbinen, Transformatorstationen, Substations, Umspannstationen oder dergleichen sein.

Windkraftanlagen werden in der Regel auf Hohlstrukturelementen gegründet. Die Hohlstrukturelemente werden dabei mit einer Bindelänge zwischen 5m bis 50m in den Erdboden gegründet. Die Hohlstrukturelemente haben bevorzugt eine Länge von > 45m insbesondere zwischen 50m und 100m. In Offshore-Anlagen werden die Hohlstrukturelemente so gegründet, dass diese Bindelängen zwischen 5m und 50m haben und zwischen 10m und 30m aus der Wasseroberfläche herausragen.

Die Hohlstrukturelemente haben Durchmesser zwischen 4m und 10m. Herkömmlicherweise werden Hohlstrukturelemente als Stahlzylinder gebildet, die mittels Rammen oder Vibrieren in den Meeresboden getrieben werden. Die Verwendung von Stahl als Material für die Hohlstrukturelemente resultiert in hohen Kosten aufgrund ihrer Herstellung sowie ihres hohen Eigengewichts. Darüber hinaus ist die Verbindung mit sogenannten "transition pieces" an der Oberseite mittels Grout-Verbindungen oder Schraubverbindungen notwendig.

Auch bekannt ist es, Betonpfähle, die aus Vollmaterial gebildet sind, durch Bohren zu gründen. Dafür wird in den Boden ein Loch gebohrt, in das der Betonpfahl eingesetzt wird. Eine derartige Gründung ist jedoch aufwändig und das notwendige Bohrgerät teuer.

Die US 2014/033628 A1 offenbart eine Windkraftanlagengründungsstruktur nach Oberbegriff von Anspruch 1. Weiterer Stand der Technik ist aus den Dokumenten US 2011/138720 A1 sowie US 3 034 304 A bekannt.

Dem Gegenstand lag die Aufgabe zugrunde, eine Gründungsstruktur zur Verfügung zu stellen, welche einfach zu gründen ist, eine hohe Tragfähigkeit hat und kostengünstig herstellbar ist.

Diese Aufgabe wird durch eine Gründungsstruktur nach Anspruch 1 gelöst. Die Aufgabe wird ferner durch ein Verfahren nach Anspruch 12 gelöst.

Die gegenständliche Gründungsstruktur weist ein Hohlstrukturelement auf, welches sich in Längsrichtung erstreckt und in Längsrichtung durch eine umlaufende Wandung gebildet ist. Die Wandung hat zwei distale Enden, die jeweils durch Stirnflächen begrenzt sind. Eine erste Stirnfläche ist eine oberseitige Stirnfläche und eine zweite Stirnfläche ist eine unterseitige Stirnfläche. Ober- und Unterseite können durch die Position des Hohlstrukturelements im finalen Einbauzustand definiert sein. Dabei ist im Einbauzustand die untere Stirnfläche im Boden gegründet, die obere Stirnfläche ragt aus dem Boden heraus.

Die Wandung ist gegenständlich aus einem mineralischen Baustoff gebildet und hat ggf eine sich nach unten hin verjüngende Wandung. Dabei verjüngt sich die Wandung ausgehend von der oberseitigen Stirnfläche hin zur unterseitigen Stirnfläche.

Eine Wandung ist begrenzt durch einen Innenwand und eine Außenwand oder durch einen Innendurchmesser und einen Außendurchmesser. Nachfolgend ist teilweise auch von einer Außenwand die Rede, wenn die Wandung gemeint ist. Die Wandung ist die äußere Begrenzung des Hohlstrukturelements. Die Wandung ist insbesondere rohrförmig. Die Wandung ist in einem Querschnitt insbesondere rund, elliptisch oder oval.

Das heißt, dass sich ein Verdrängungsvolumen pro Längenerstreckung des Hohlstrukturelements von der unteren Stirnfläche hin zur oberen Stirnfläche vergrößert. Hierdurch wird erreicht, dass die gegenständliche Gründungsstruktur einfach mittels Rammen oder Vibrieren gegründet werden kann. Anders als herkömmliche Betonpfähle, die aus Vollmaterial gebildet sind, lässt sich die gegenständliche Gründungsstruktur in der Art eines Hohlstrukturelementes leichter gründen. Um beim Gründen den Widerstand beim Eindringen in den Erdboden gering zu halten, ist die unterseitige Stirnfläche kleiner als die oberseitige Stirnfläche. Das Hohlstrukturelement dringt so keilförmig in den Boden ein und kann leichter vorgetrieben werden als ein sich nicht verjüngendes Hohlstrukturelement oder ein Element aus Vollmaterial.

Das Hohlstrukturelement hat bevorzugt eine Bindelänge von zumindest 7m. Diese kann ausreichend sein, das Hohlstrukturelement ausreichend im Erdboden zu gründen. Bindelängen zwischen 7m und 20m sind bevorzugt.

Gemäß einem Ausführungsbeispiel wird vorgeschlagen, dass das Hohlstrukturelement mindestens über eine Längserstreckung von 50% monolithisch hergestellt ist. Es wird auch vorgeschlagen, dass das Hohlstrukturelement im Bereich seines unteren Endes bis zumindest 5m oberhalb des Meeresbodens/Geländebodens monolithisch hergestellt ist. Der monolithische Teil des Hohlstrukturelements wird zumindest teilweise in den Boden gegründet.

Das Hohlstrukturelement kann eine Längenerstreckung aufweisen, bei der die Oberkante des Hohlstrukturelements im Einbauzustand mindestens 5m oberhalb des Meeresboden endet und insbesondere nicht mehr als 2 mal den Außen- oder Innendurchmesser des Hohlstrukturelements, insbesondere weniger als 3 mal den Außen- oder Innendurchmesser des Hohlstrukturelements oberhalb des Meeresbodens endet.

Das monolithische Ende des Hohlstrukturelements ist bevorzugt mechanisch vorgespannt. Die durch Vorspannung erzeugte Druckkraft im Beton ist derart, dass die beim Rammen und/oder Vibrieren eines monolithischen Pfahls gleicher Masse und Dimension auftretenden Zugkräfte zu mindestens 70%, insbesondere mindestens 85% kompensiert werden. Die Vorspannung ist bevorzugt diejenige Vorspannkraft, welche nach Abzug von Relaxation des Spannstahls und/oder von Kriech- und Schwindverlusten im Beton und Reibverlusten als Netto Spannkraft bestimmt wird.

Die durch Vorspannung erzeugte Druckkraft im Beton ist derart, dass die durch Vorspannung erzeugte Druckkraft im Beton die im Betrieb und/oder unter maximal Belastung in einem monolithischen Pfahls gleicher Masse und Dimension auftretenden Zugkräfte zu mindestens 45%, insbesondere mindestens 65% kompensiert (überdrückt werden) werden.

Da gegenüber Stahlstrukturen das gegenständliche Hohlstrukturelement eine Wandung aufweist, die eine größere Wandstärke hat, ist zunächst das Gründen mittels Vibrieren oder Rammen erschwert. Dadurch, dass sich die Wandung nach unten hin keilförmig verjüngt, wird das Eindringen in den Boden erleichtert.

Gemäß einem Ausführungsbeispiel wird vorgeschlagen, dass das Hohlstrukturelement hohlzylindrisch ist. Durch die zylindrische Form ist die strukturelle Integrität erhöht, sodass das Hohlstrukturelement höhere Biegemomente aufnehmen kann.

Gemäß einem Ausführungsbeispiel wird vorgeschlagen, dass sich eine Wandstärke der Wandung zumindest entlang von Teilen einer Längserstreckung des Hohlstrukturelements stetig verjüngt. Insbesondere kann sich die Wandung kontinuierlich verjüngen. Unter einer stetigen Verjüngung wird verstanden, dass keine Sprünge oder Stufen vorhanden sind.

Auch wird vorgeschlagen, dass sich eine Wandstärke der Wandung zumindest entlang von Teilen einer Längserstreckung des Hohlstrukturelements stufig verjüngt. Hierbei kann jeweils in Stufen, beispielsweise in Abständen zwischen 2,5m und 15m jeweils ein Versprung der Wandstärke gebildet sein. An den Stufen können jedoch Hohlkehlen oder kegelförmige Übergänge gebildet sein, sodass beim Eintreiben des Hohlstrukturelements in den Boden die Stufen einen vertretbaren Widerstand bilden. Die Hohlkehlen oder kegelförmige Übergänge können umlaufend an jeweils einer Stufe vorgesehen sein.

Gemäß einem Ausführungsbeispiel wird vorgeschlagen, dass sich durch die Verjüngung der Innendurchmesser des Hohlstrukturelements vergrößert. Der Innenradius verändert sich abhängig von der Längserstreckung des Hohlstrukturelements, sodass ein innerer Konus gebildet wird. Dabei ist insbesondere der Außenradius entlang der Längserstreckung zumindest in Teilen konstant.

Auch wird vorgeschlagen, dass sich durch die Verjüngung der Außendurchmesser des Hohlstrukturelements verkleinert. Der Außenradius verändert sich entlang der Längserstreckung des Hohlstrukturelements. Das Hohlstrukturelement verläuft insbesondere von oben nach unten konisch zusammen. Der Innenradius ist dabei in Teilen der Längserstreckung des Hohlstrukturelements konstant.

Auch wird vorgeschlagen, dass sowohl Innenradius als auch Außenradius sich abhängig von der Längserstreckung verändern. Bei der Verjüngung wird der Innenradius größer und der Außenradius kleiner. Der Gradient des Innenradius als auch der Gradient des Außenradius kann betragsmäßig in Längserstreckung gleich sein. Das heißt, dass Innen- und Außenradius im gleichen Maße anwachsen bzw. sich verkleinern, abhängig von der Längserstreckung des Hohlstrukturelements.

Gemäß einem Ausführungsbeispiel wird vorgeschlagen, dass der Baustoff zumindest in Teilen Zement enthält. Der Baustoff ist insbesondere Beton, der aus Zement, Kies, Sand und Wasser angemischt ist und nach dem Vergießen ausgehärtet ist.

Für eine gute Tragfähigkeit hat sich herausgestellt, dass der Wasser-Zement-Wert (w/z) des Baustoffs <0,45 insbesondere <0,35 oder <0,3 ist.

Die bei Windkraftanlagen auftretenden Momente und Scherkräfte werden durch das Hohlstrukturelement insbesondere dann ausreichend aufgenommen, wenn der Baustoff eine Festigkeitsklasse von zumindest C40/50, bevorzugt C70/85, insbesondere C100/115 nach EN 206 und EN1992 aufweist.

Eine über die Lebensdauer der Windkraftanlage ausreichende Langzeitstabilität der Gründungsstruktur, insbesondere bei dauerhafter Penetration durch Wasser wird insbesondere dadurch erreicht, dass der Baustoff einen Porengehalt (Luftporen) von weniger als 5%, bevorzugt weniger als 3%, insbesondere weniger als 2% aufweist. Die Gesamtporosität gemessen mit Quecksilberdruckporosität sollte nach 28 Tagen P_{28d}<12 Vol-% und nach 90 Tagn P_{90d}<10 Vol-%

Eine ausreichende Tragfähigkeit des Hohlstrukturelements wird insbesondere dadurch erreicht, dass der Baustoff einen Zementgehalt von zumindest 350kg/m³, bevorzugt mehr als 450kg/m³, insbesondere mehr als 650kg/m³ aufweist.

Insbesondere bei der dauerhaften Penetration von Wasser bei Installation der Gründungsstruktur Offshore, wird eine ausreichende Lebensdauer dadurch erreicht, dass der Baustoff bei einer Quecksilberdruckporosimetrischen Messung eine Porosität von P_{28d<}12 Vol.-% aufweist. P_{28d} ist eine Messung über 28 Tage. Die Porosität ist dabei bevorzugt auch kleiner als 10 Vol.-%. Bei P_{90d}, das heißt einer Messung über 90 Tage ist die Porosität bevorzugt < 10Vol.-%, insbesondere < 8Vol.-%.

Gemäß einem Ausführungsbeispiel wird vorgeschlagen, dass die Wandung mechanisch vorgespannt ist. Durch die Vorspannung werden Risse überdrückt und somit die Oberflächen weitestgehend frei von Zugspannung gehalten, was bei insbesondere schwankenden Drehmomentbelastungen vorteilhaft ist. Die Vorspannkraft ist dabei bevorzugt 5%, insbesondere mehr als 15% größer als die Druckfestigkeit der Wandung. Die Vorspannkraft wird vorzugsweise in Längsrichtung aufgebracht.

Für eine erhöhte Stabilität bei dynamischen Umgebungsbedingungen wird vorgeschlagen, dass der Baustoff metallisch armiert ist. Die metallische Armierung ist insbesondere eine Stahlarmierung. Die Armierung kann durch Fasern oder Armiereisen gegeben sein. Eine Faserarmierung kann auch durch Kohlefaser, Glasfaser oder Metallfaser erreicht werden.

Die Armierung kann so sein, dass diese bei 90% der Messstellen, bevorzugt bei 98% der Messstellen zumindest als 26mm bevorzugt zumindest als 40mm Betondeckung aufweist.

Der Baustoff kann mit ferritisch nichtrostenden Betonstahl armiert sein. Die Armierung kann einen Chromgehalt von 18M% nicht überschreitet. Die Armierung kann Molybdänbestanteile aufweisen.

Der Baustoff kann mit austenitisch nichtrostenden Betonstahl armiert sein. Die Armierung kann zumindest 5 M% insbesondere zwischen 5 M% - 14 M% Nickel und/oder zwischen 12 M%-22 M% insbesondere 15 M% - 20 M% Chrom aufweisen.

Der Baustoff kann mit ferritisch-austenitisch nichtrostenden Betonstahl armiert sein. Die Armierung kann zumindest 18 M%, insbesondere zwischen 15 M% - 20 M% Chrom und 2 M% - 8 M% Nickel und optional Molybdän aufweisen.

Gemäß einem Ausführungsbeispiel wird vorgeschlagen, dass die oberseitige Stirnfläche metallisch verstärkt ist, insbesondere dass eine metallische Armierung aus der oberseitigen Stirnfläche herausragt. Über die Oberseite wird das Hohlstrukturelement in den Boden gegründet, insbesondere gerammt oder vibriert. Das heißt bei der Gründung selbst ist die mechanische Belastung auf der oberseitigen Stirnfläche sehr hoch. Um diesen mechanischen Belastungen standzuhalten und insbesondere um eine Beschädigung zu verhindern, ist eine metallische Verstärkung der Stirnfläche bevorzugt. Ist ein umlaufender Steg vorgesehen, der aus der Stirnfläche herausragt, kann das Gründungswerkzeug, entweder das Vibrationswerkzeug oder das Rammwerkzeug auf dieser Armierung aufliegen und nicht unmittelbar auf dem Baustoff des Hohlstrukturelements. Da eine metallische Armierung erheblich duktiler ist als ein mineralischer Baustoff, wird hierdurch beim Gründen eine Beschädigung verhindert.

Gemäß einem Ausführungsbeispiel wird vorgeschlagen, dass die Dichte der Armierung in einem Endbereich des Hohlstrukturelements an dessen ober- und/oder Unterseitigen Stirnfläche größer ist als in einem Mittenbereich des Hohlstrukturelements. Die mechanische Belastung an den Stirnflächen ist insbesondere während der Gründung höher als in einem Mittenbereich. An der oberseitigen Stirnfläche greift das Werkzeug zur Gründung an, insbesondere ein Rammwerkzeug oder ein Vibrationswerkzeug. An der unterseitigen Stirnfläche wird das Hohlstrukturelement in den Boden gerammt und die unterseitige Stirnfläche muss den Boden verdrängen. An diesen beiden Stirnflächen ist die Armierung größer, das heißt die Dichte der Armierung ist erhöht gegenüber einem Mittenbereich.

An einer unterseitigen Stirnfläche kann insbesondere ein sich verjüngender Keil vorgesehen sein, der sich wegweisend von dem Hohlstrukturelement verjüngt. Der Keil kann aus dem Baustoff des Hohlstrukturelements gebildet sein oder aus einer metallischen Werkstoff. Durch die Keilform der Unterseite wird das Verdrängen des Bodens beim Gründen vereinfacht.

Gemäß einem Ausführungsbeispiel wird vorgeschlagen, dass sich ein Innendurchmesser der Wandung in einem Endbereich des Hohlstrukturelements hin zu der oberseitigen Stirnfläche vergrößert, insbesondere konisch vergrößert. Dies ermöglicht eine Groutverbindung mit einem Transition Piece. Der Endbereich kann sich von einer Stirnkante mit mindestens 0.3 insbesondere 0,5 mal dem Innendurchmesser in Längserstreckung erstrecken.

Gemäß einem Ausführungsbeispiel wird vorgeschlagen, dass sich ein Außendurchmesser der Wandung in einem Endbereich des Hohlstrukturelements hin zu der oberseitigen Stirnfläche verkleinert, insbesondere konisch verkleinert. Der Endbereich kann sich von einer Stirnkante mit mindestens 0.3 insbesondere 0,5 mal dem Innendurchmesser in Längserstreckung erstrecken.

Das Transition Piece kann mit einem zu dem Innendurchmesser der Wandung kongruenten Pfahl oder Zylinderelement in das Hohlstrukturelement eingesetzt werden. Ein Ringspalt zwischen der inneren Mantelfläche des Hohlstrukturelements und der äußeren Mantelfläche des Transition Piece kann durch Stege, Abstandshalter oder dergleichen gebildet sein. In diesen Ringspalt kann Beton oder Zementleim eingefüllt werden, sodass eine feste Verbindung zwischen Hohlstrukturelement und Transition Piece gebildet wird. Auch kann der Außendurchmesser des Endbereichs hin zu der oberseitigen Stirnfläche sich verkleinern, sodass sich dieser konisch verjüngt. Hierauf kann beispielsweise ein Transition Piece aufgestülpt werden und entsprechend eine Groutverbindung gebildet werden.

Gemäß einem Ausführungsbeispiel wird vorgeschlagen, dass an der inneren Mantelfläche der Wandung in einem Endbereich des Hohlstrukturelements ein radial nach innen weisender Anschlag gebildet ist. Der Anschlag kann durch mehrere in Winkelabständen zueinander gebildete "Simse" gebildet sein. Der Anschlag kann insbesondere durch radial nach innen weisende Vorsprünge gebildet sein. Der Anschlag kann teilweise oder vollständig umlaufend sein. Der Anschlag dient als Anschlag für das Transition Piece, welches in das Hohlstrukturelement eingesetzt wird. Durch eine geeignete axiale Anordnung des Anschlags wird ein Ringspalt zwischen der inneren Mantelfläche des Hohlstrukturelements und der äußeren Mantelfläche der Transition Piece gewährleistet, in welchen Beton oder Grout eingefüllt werden kann um eine Groutverbindung zu bilden. Alternativ wird die Steckverbindiundung ohne Verfüllmasse aus Passverbindung ausgeführt.

Für eine Anlandeplattform oder eine Installationsplattform kann an der äußeren Mantelfläche der Wandung in einem Endbereich des Hohlstrukturelements eine radial nach außen weisende Schürze gebildet sein. Die Schürze kann teilweise oder vollständig umlaufend sein. Die Schürze ist insbesondere beabstandet von der oberen Stirnfläche in axialer Richtung.

An dem Hohlstrukturelement kann das zugehörige Transitionpiece angebracht, insbesondere aufgesteckt, insbesondere eingesteckt oder übergesteckt sein. Das Transitionpiece kann mindestens eine Schiffsanlandungseinrichtung mit Leiter aufweisen.

Für eine erhöhte Standfestigkeit wird vorgeschlagen, dass der Baustoff versiegelt ist, insbesondere mit einer Dichtungsfolie. Eine solche Dichtungsfolie kann beispielsweise eine Aluminium-Butyl-Dichtfolie sein.

Ein weiterer Aspekt ist ein Verfahren zur Herstellung einer soeben beschriebenen Windkraftanlagengründungsstruktur.

Hierbei wird zunächst Onshore eine Schalung gebildet. Diese Schale hat einen Ringspalt haben, welcher sich von einem ersten Ende hin zu einem zweiten Ende verjüngt. Der Ringspalt ist radial umlaufend und erstreckt sich in axialer Richtung über die gesamte Schalung. In den Ringspalt der Schalung wird flüssiger Beton gegossen und anschließend ausgehärtet. Der ausgehärtete Beton bildet das Hohlstrukturelement und die Schalung kann entfernt werden.

Anschließend, nachdem der Beton ausgehärtet ist, wird das Hohlstrukturelement zu einem Offshore-Aufstellungsort verschifft. An dem Offshore-Aufstellungsort wird das Hohlstrukturelement rammend oder vibrierend mit der im Einbauzustand unterseitigen Stirnfläche in den Meeresboden gegründet.

Um die Bauzeit zu verkürzen und insbesondere das Aushärten des Betons zu verkürzen, wird vorgeschlagen, dass der Beton in einem Autoklav ausgehärtet wird. Hierdurch kann die Trockenzeit maßgeblich reduziert werden.

Um die Standfestigkeit im Meerwasser zu erhöhen, wird vorgeschlagen, dass der Beton versiegelt wird. Dazu kann die Oberfläche beispielsweise vakuumiert oder Beschichtet werden.

Bei der Fertigung kann der Beton des Hohlstrukturelements durch Rotation verdichtet werden. Dabei kann eine Außenschalung wasserdurchlässig und/oder stellenweise perforiert sein, so dass durch die Zentrifugalkraft nach außen transportiertes Wasser nach außen aus der Schalung austreten kann.

Die Schalung, mit der die Wandung hergestellt wird, ist insbesondere eine Gleitschalung (Slipform-Verfahren) oder Kletterschalung (Jumpform-Verfahren).

Um das Befüllen mit Beton zu erleichtern und insbesondere um ein Verdichten des Betons in der Schalung zu erleichtern, wird vorgeschlagen, dass das erste Ende der Schalung bodenseitig ist und das zweite Ende der Schalung oberseitig ist. Dadurch ist das erste Ende, an welchem der Ringspalt größer ist als an dem zweiten Ende bodenseitig und die Schalung verjüngt sich vom Boden hin nach oben. Für die Gründung muss dann das gesamte Hohlstrukturelement einmal um 180° gedreht werden, sodass die Stirnfläche mit der Wandung mit der geringeren Wandstärke unten liegt und die Stirnfläche mit der Wandung mit der größeren Wandstärke oben liegt. Anschließend kann das Hohlstrukturelement rammend oder vibrierend gegründet werden.

Es wird vorgeschlagen, dass das Hohlstrukturelement in horizontaler Ausrichtung hergestellt wird. Um die Anzahl der Drehungen, insbesondere Offshore, so gering wie möglich zu halten, wird vorgeschlagen, dass das Hohlstrukturelement aufrecht stehend zu dem Offshore-Aufstellungsort verschickt wird. Über einen Kran kann das Hohlstrukturelement stehend auf ein Schiff geladen werden. Dort muss es am Aufstellungsort lediglich von dem Schiff herunter geladen werden, ohne es zu drehen. Hierdurch ist der maschinentechnische Aufwand Offshore reduziert.

Nachfolgend wird der Gegenstand anhand einer Ausführungsbeispiele zeigenden Zeichnung näher erläutert. In der Zeichnung zeigen:
- Fig. 1: eine Windkraftanlage mit einer Windkraftanlagengründungsstruktur;
- Fig. 2: eine Windkraftanlagengründungsstruktur gemäß einem Ausführungsbeispiel;
- Fig. 3: ein Längsschnitt durch eine Windkraftanlagengründungsstruktur gemäß einem Ausführungsbeispiel;
- Fig. 4: ein Längsschnitt durch eine Windkraftanlagengründungsstruktur gemäß einem Ausführungsbeispiel;
- Fig. 5a-f: schematisch überhöhte Darstellungen von Längsschnitten durch Windkraftanlagengründungsstrukturen gemäß Ausführungsbeispielen;
- Fig. 6a, b: ein Detail eines stufigen Übergangs;
- Fig. 7: das Aufstellen einer Windkraftanlagengründungsstruktur gemäß einem Ausführungsbeispiel.

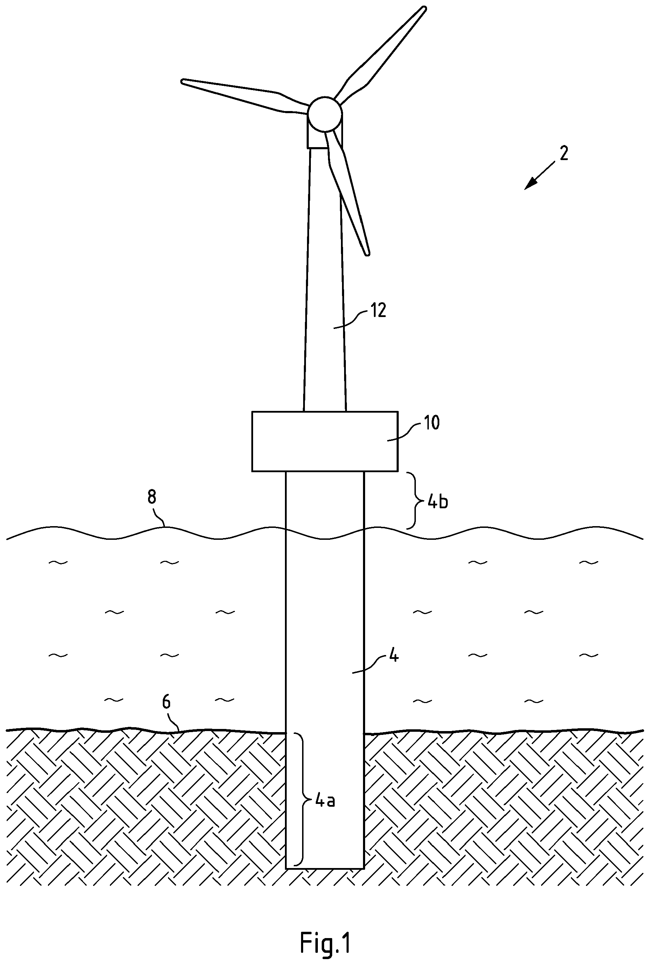

Fig. 1 zeigt eine Windkraftanlage 2, welche Offshore gegründet ist. Alle hier gemachten Aussagen gelten sowohl für Offshore-Gründungsstrukturen als auch für Onshore-Gründungsstrukturen.

Die Windkraftanlage 2 ist über eine Windkraftanlagengründungsstruktur 4 in einem Meeresboden 6 gegründet. Die Gründungsstruktur 4 ist mit einer Einbindelänge 4a in den Meeresboden gegründet. Die Gründungsstruktur ragt mit einer Länge 4b über die Wasseroberfläche 8 hinaus. Die Gründungsstruktur ist mit einem Transition Piece 10 verbunden, beispielsweise über eine Groutverbindung, die herkömmlich bekannt ist.

An dem Transition Piece 10 ist hier beispielhaft eine Windturbine 12 angeordnet, es kann jedoch auch eine Substation, eine Umspannstation oder dergleichen vorgesehen sein. Zur Gründung der Gründungsstruktur 4 wird diese in den Meeresboden 6 gerammt oder vibriert.

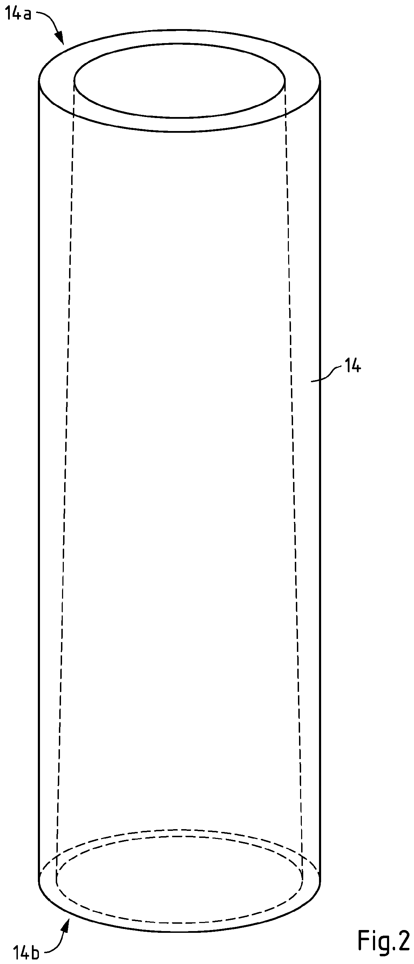

Gegenständlich wird nun vorgeschlagen, dass die Gründungsstruktur 4 aus einem Hohlstrukturelement 14, wie es in Fig. 2 gezeigt ist, gebildet ist. Das Hohlstrukturelement 14 ist aus Beton gegossen und hat eine obere Stirnfläche 14a und eine untere Stirnfläche 14b. Das Hohlstrukturelement 14 ist bevorzugt hohlzylindrisch. Die Wandstärke des Hohlstrukturelements 14 nimmt ausgehend von der oberen Stirnfläche 14a hin zur unteren Stirnfläche 14b ab. Hierdurch kann ein Gründen im Meeresboden 6 erleichtert sein.

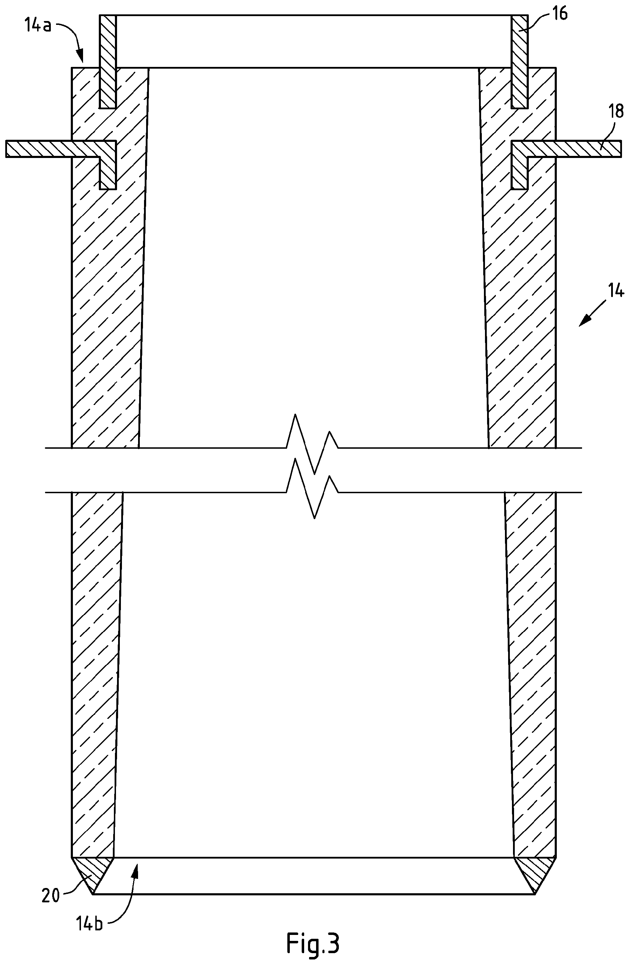

Die beiden distalen Enden des Hohlstrukturelements 14 sind in der Fig. 3 vergrößert dargestellt. An der oberen Stirnfläche 14a des Hohlstrukturelements 14 kann ein umlaufender Steg 16 aus der oberen Stirnfläche 14a herausragen. Dieser Steg 16 kann dazu genutzt werden, Rammkräfte oder Vibrationen des Gründungswerkzeugs aufzunehmen. Der Steg 16 ist bevorzugt aus Stahl gebildet und erheblich duktiler als der Beton des Hohlstrukturelements 14. Beim Rammen oder Vibrieren werden die Kräfte durch den Steg 16 aufgenommen und gleichmäßig in das Hohlstrukturelement 14 geleitet. Hierdurch wird eine Beschädigung der oberen Stirnfläche 14a verhindert.

In dem Bereich des oberen Endes kann ein umlaufender Kragen (auch Schürze genannt) 18 vorgesehen sein. Der umlaufende Kragen 18 kann als Anlandestruktur, Steg oder dergleichen gebildet sein. Der Kragen 18 kann mit einem Abstand in axialer Richtung von der oberen Stirnfläche 14a angeordnet sein.

In der Fig. 3 ist ferner zu erkennen, dass das Hohlstrukturelement 14 mit einer unteren Stirnfläche 14b am unteren Ende abschließt. Die untere Stirnfläche 14b hat eine geringere radiale Ausdehnung als die obere Stirnfläche 14a. Dies kommt von der Verjüngung des Hohlstrukturelements 14 von der oberen Stirnfläche 14a hin zur unteren Stirnfläche 14b. An der unteren Stirnfläche 14b kann ein Keil 20 vorgesehen sein, der beispielsweise aus Stahl gebildet ist. Über diesen Keil kann ein Gründen vereinfacht sein. Die Elemente 16, 18 und 20 sind optional.

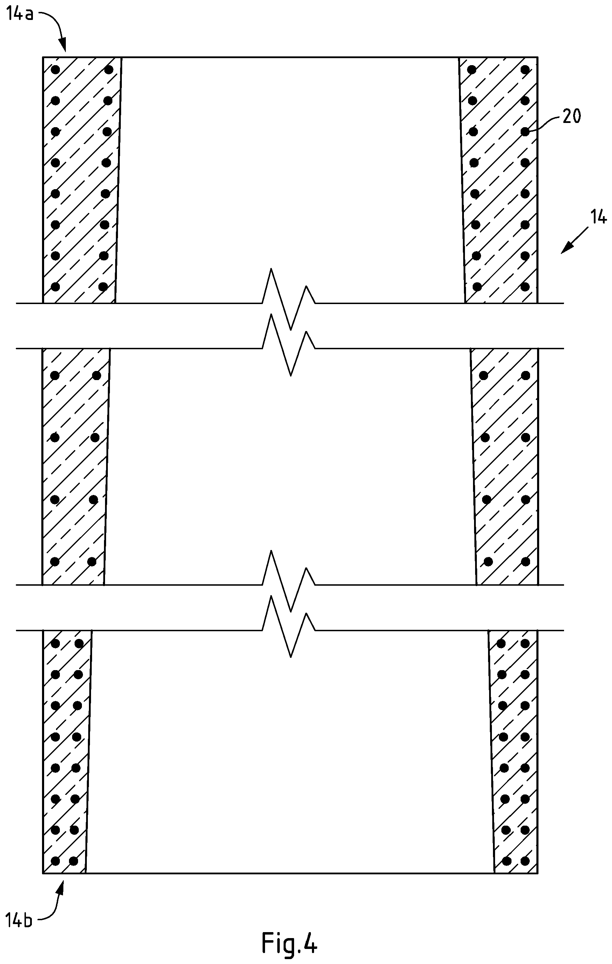

Fig. 4 zeigt das Hohlstrukturelement 14 gemäß der Fig. 3 mit seinem oberen Ende, einem Mittenbereich und seinem unteren Ende. In dem Längsschnitt sind die Armierungen 20 eingezeichnet. Zu erkennen ist, dass die Dichte der Armierung 20 im oberen als auch im unteren Ende höher ist, als in einem Mittenbereich.

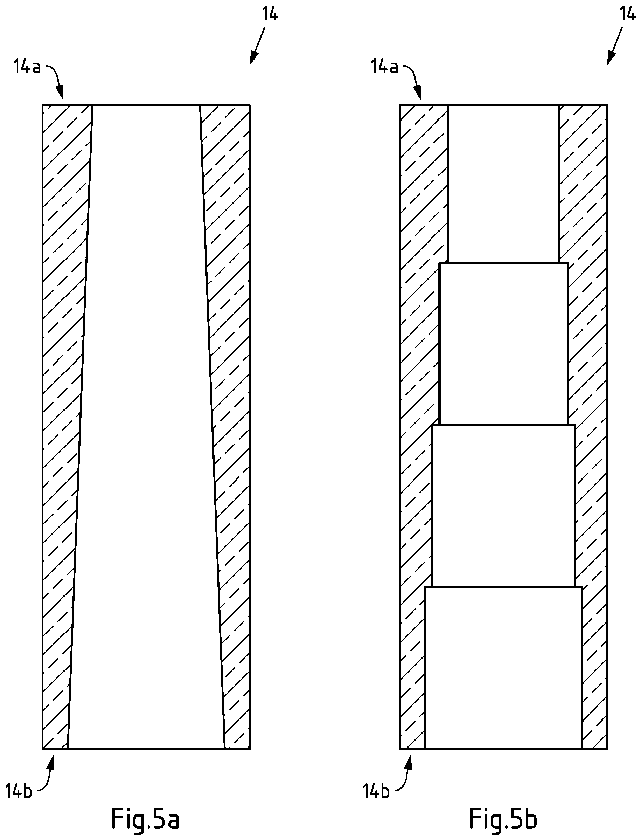

Die Verjüngung von der oberen Stirnfläche 14a bis zur unteren Stirnfläche 14b kann unterschiedlich erfolgen, wie in den Fig. 5a-f gezeigt ist. Hierbei sei angemerkt, dass die Figuren rein schematisch und stark überhöht dargestellt sind, um das Prinzip der Verjüngung zu verdeutlichen. Die Zeichnungen sind weder maßstabsgerecht noch zeigen sie die korrekte Relation der Größen zueinander. Vielmehr sollen die Zeichnungen lediglich das Prinzip verdeutlichen.

Fig. 5a zeigt das Hohlstrukturelement 14, bei dem ein Durchmesser einer inneren Mantelfläche von der oberen Stirnfläche 14a hin zur unteren Stirnfläche 14b stetig zunimmt. Der Durchmesser der äußeren Mantelfläche ist konstant.

In der Fig. 5b ist gezeigt, dass ein Innendurchmesser der inneren Mantelfläche von der oberen Stirnfläche 14a zur unteren Stirnfläche 14b stufig zunimmt. Der Durchmesser der äußeren Mantelfläche ist kontant.

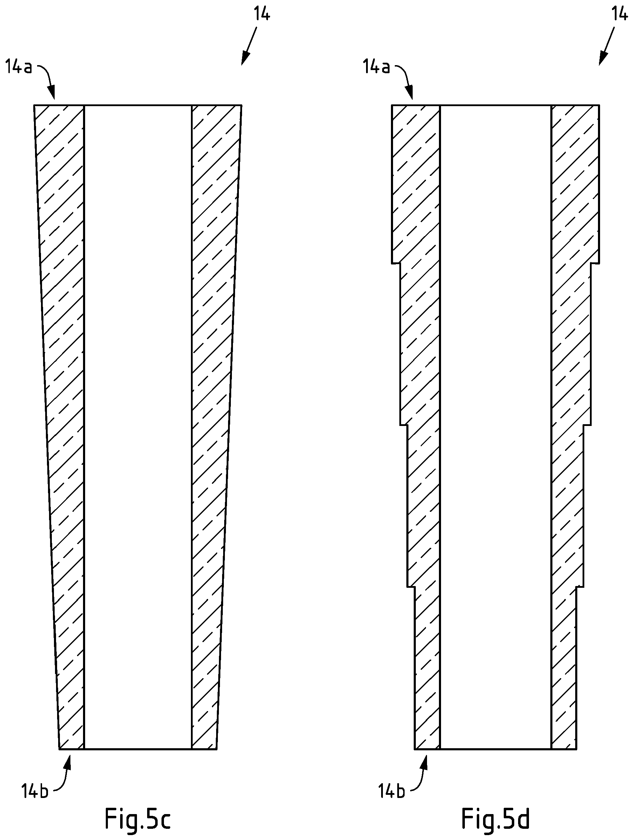

Fig. 5c zeigt, dass der Durchmesser der äußeren Mantelfläche von der oberen Stirnfläche 14a hin zur unteren Stirnfläche 14b stetig abnimmt. Der Durchmesser der inneren Mantelfläche ist konstant.

Fig. 5d zeigt, wie der Durchmesser der äußeren Mantelfläche stufig von der oberen Stirnfläche 14a hin zur unteren Stirnfläche 14b abnimmt. Der Durchmesser der inneren Mantelfläche ist konstant.

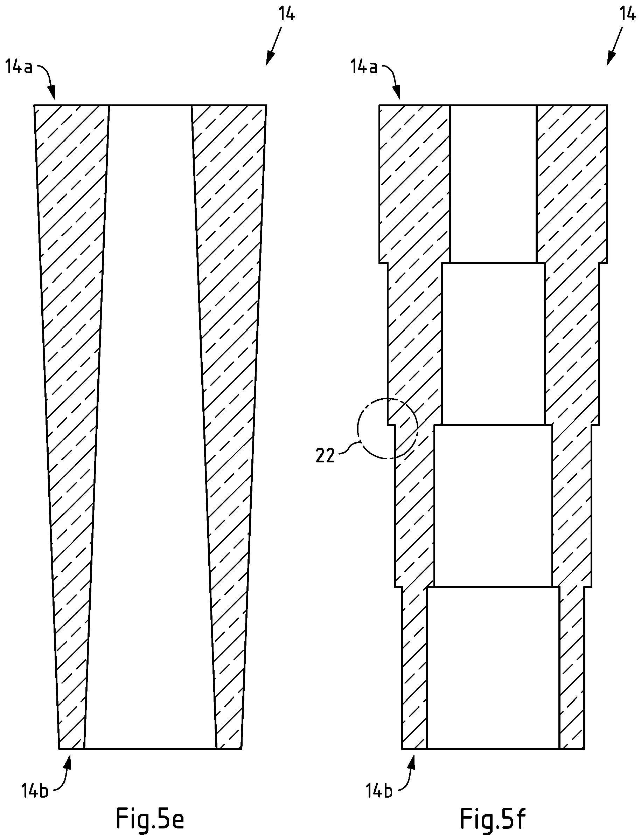

Fig. 5e zeigt wie der Durchmesser der inneren Mantelfläche von der oberen Stirnfläche 14a hin zur unteren Stirnfläche 14b stetig zunimmt und der Durchmesser der äußeren Mantelfläche stetig abnimmt.

Fig. 5f zeigt wie der innere Durchmesser von der oberen Stirnfläche 14a hin zur unteren Stirnfläche 14b stufig zunimmt und der Durchmesser der äußeren Mantelfläche stufig abnimmt.

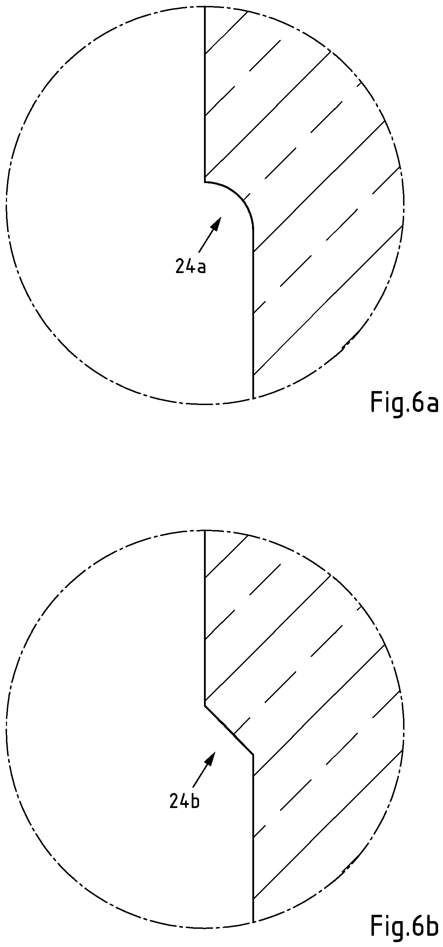

Ein Detail 22 einer Stufe ist in den Fig. 6a und b gezeigt. Eine Stufe gemäß den Fig. 5b, 5d oder 5f kann wie in Fig. 6a gezeigt als Hohlkehle 24a gebildet sein. Eine Stufe kann, wie in Fig. 6b gezeigt, als keilförmig 24b geformt sein.

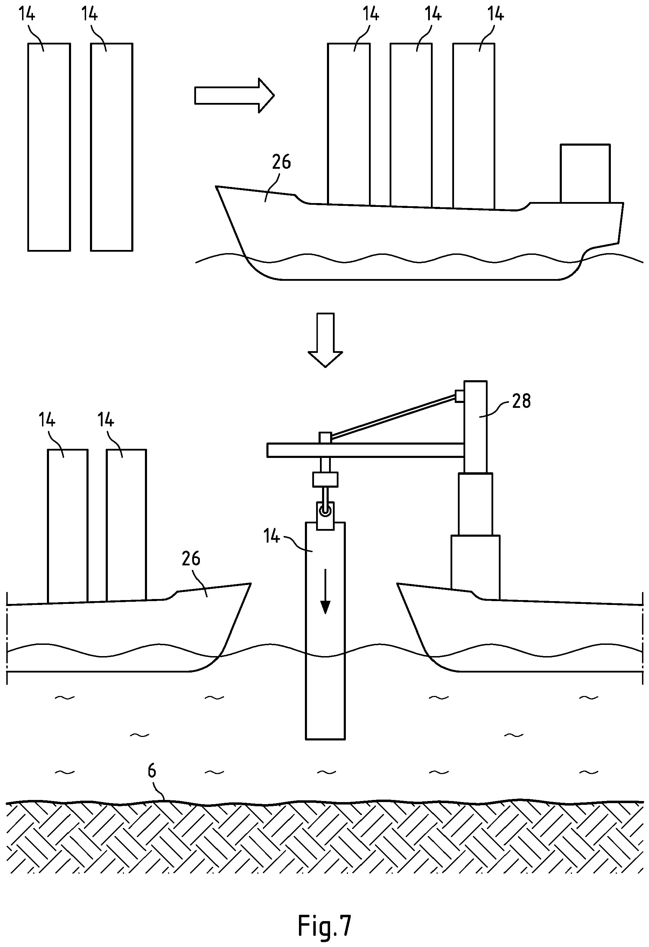

Fig. 7 zeigt ein Verfahren zur Gründung eines Hohlstrukturelements 14 auf See. Zunächst werden die Hohlstrukturelemente 14 in Slipform- und Jumpform-Verfahren aus Beton gegossen und aufrecht stehend getrocknet. Anschließend werden die Hohlstrukturelemente 14 einmal um 180° gedreht und auf ein Schiff 26 verladen.

Aufrecht stehend auf dem Schiff 26 werden die Hohlstrukturelemente zu einem Aufstellungsort verschifft und dort mit einem geeigneten Gründungswerkzeug 28 gegründet. Die Hohlstrukturelemente 14 sind auf dem Schiff 26 bereits so gelagert, dass die untere Stirnfläche 14b unten ist und die obere Stirnfläche 14a oben ist, sodass beim Gründen die untere Stirnfläche 14b auf den Meeresboden 6 aufgesetzt wird und mittels des Gründungswerkzeugs 28 das Hohlstrukturelement 14 in den Meeresboden gerammt wird.

### Bezugszeichenliste

- 2: Windkraftanlage
- 4: Gründungsstruktur
- 6: Meeresboden
- 8: Meeresspiegel
- 10: Transition piece
- 12: Windturbine
- 14: Hohlstrukturelement
- 14a: obere Stirnfläche
- 14b: untere Stirnfläche
- 16: Steg
- 18: Kragen
- 20: Armierung
- 22: Detail
- 24a: Hohlkehle
- 24b: Keil
- 26: Schiff
- 28: Gründungswerkzeug

## Patentansprüche

1. Windkraftanlagengründungsstruktur umfassend,
- ein Hohlstrukturelement mit einer sich in Längsrichtung erstreckenden, umlaufenden Wandung, wobei die Wandung oberseitig mit einer oberseitigen Stirnfläche begrenzt ist und unterseitig mit einer unterseitigen Stirnfläche begrenzt ist, wobei
- die Wandung aus einem mineralischen Baustoff gebildet ist,
**dadurch gekennzeichnet,**
- **dass** sich eine Wandstärke der Wandung von der im Einbauzustand oberseitigen Stirnfläche hin zur im Einbauzustand unterseitigen Stirnfläche verjüngt.

2. Windkraftanlagengründungsstruktur nach Anspruch 1
**dadurch gekennzeichnet,**
-- dass das Hohlstrukturelement hohlzylindrisch ist und/oder
- dass sich eine Wandstärke der Wandung zumindest entlang von Teilen einer Längserstreckung des Hohlstrukturelements stetig verjüngt, oder
- dass sich eine Wandstärke der Wandung zumindest entlang von Teilen einer Längserstreckung des Hohlstrukturelements stufig verjüngt.

3. Windkraftanlagengründungsstruktur nach einem der vorangehenden Ansprüche,
**dadurch gekennzeichnet,**
- **dass** das sich durch die Verjüngung der Innendurchmesser des Hohlstrukturelements vergrößert und/oder sich durch die Verjüngung der Außendurchmesser des Hohlstrukturelements verkleinert.

4. Windkraftanlagengründungsstruktur nach einem der vorangehenden Ansprüche, **dadurch gekennzeichnet,**
- **dass** der Baustoff zumindest in Teilen Zement enthält, und/oder
- **dass** der Wasserzementwert des Baustoffs kleiner 0,45 ist insbesondere kleiner 0,35 oder kleiner 0,3 ist, und/oder
- **dass** der Baustoff eine Festigkeitsklasse von zumindest C40/50, bevorzugt C70/80, insbesondere C100/115 nach EN 206 und EN 1992 aufweist und/oder
- **dass** der Baustoff einen Porengehalt von weniger als 5%, bevorzugt weniger als 3%, insbesondere weniger als 2% aufweist, und/oder
- dass der Baustoff einen Zementgehalt von zumindest 350kg/m³, bevorzugt mehr als 450kg/m³, insbesondere mehr als 550 kg/m³ , insbesondere von bis zu 600lg/m³, aufweist und/oder
- **dass** der Baustoff bei einer Quecksilberdruckporosimetrischen Messung eine Porosität P_{28d} kleiner 12 vol %, insbesondere kleiner 10 Vol% und P_{90d} kleiner 10 Vol %, insbesondere kleiner 8 vol% ist

5. Windkraftanlagengründungsstruktur nach einem der vorangehenden Ansprüche, **dadurch gekennzeichnet,**
- **dass** die Wandung mechanisch vorgespannt, ist, insbesondere mit einer Vorspannkraft von mehr als 5%, insbesondere mehr als 15% der Druckfestigkeit der Wandung, wobei die Vorspannkraft vorzugsweise in Längsrichtung aufgebracht wird.

6. Windkraftanlagengründungsstruktur nach einem der vorangehenden Ansprüche, **dadurch gekennzeichnet,**
- **dass** der Baustoff metallisch armiert ist und/oder
- **dass** die Armierung nicht weniger als 26mm bevorzugt nicht weniger als 40mm Betondeckung aufweist und/oder
- **dass** der Baustoff mit ferritisch nichtrostenden Betonstahl armiert ist, deren Chromgehalt 18M% nicht überschreitet und/oder
- **dass** der Baustoff mit austenitisch nichtrostenden Betonstahl, welcher mind 5% insbesondere mit 8% bis zu 14M% Nickel und mit 12M%-22M% insbesondere 15% - 20% Chrom enthält, armiert ist, und/oder
- **dass** der Baustoff mit ferritisch-austenitisch nichtrostenden Betonstahl, welcher mind 18M% Chrom und 2%-8% Nickel, armiert ist.

7. Windkraftanlagengründungsstruktur nach einem der vorangehenden Ansprüche, **dadurch gekennzeichnet,**
- **dass** die oberseitige Stirnfläche metallisch verstärkt ist, insbesondere dass eine metallische Armierung aus der oberseitigen Stirnfläche heraus ragt, insbesondere vollständig umlaufend aus der oberseitigen Stirnfläche heraus ragt und/oder
- **dass** die Dichte der Armierung in einem Endbereich des Hohlstrukturelements an dessen oberseitigen und/oder unterseitigen Stirnfläche größer ist als in einem Mittenbereich des Hohlstrukturelements.

8. Windkraftanlagengründungsstruktur nach einem der vorangehenden Ansprüche, **dadurch gekennzeichnet,**
- **dass** sich ein Innendurchmesser der Wandung in einem Endbereich des Hohlstrukturelements hin zu der oberseitigen Stirnfläche vergrößert, insbesondere konisch vergrößert.

9. Windkraftanlagengründungsstruktur nach einem der vorangehenden Ansprüche, **dadurch gekennzeichnet,**
- **dass** an der inneren Mantelfläche der Wandung in einem Endbereich des Hohlstrukturelements ein radial nach innen weisender Anschlag gebildet ist.

10. Windkraftanlagengründungsstruktur nach einem der vorangehenden Ansprüche, **dadurch gekennzeichnet,**
- **dass** an der äußeren Mantelfläche der Wandung in einem Endbereich des Hohlstrukturelements ein radial nach außen weisender Kragen gebildet ist.

11. Windkraftanlagengründungsstruktur nach einem der vorangehenden Ansprüche, **dadurch gekennzeichnet,**
- **dass** der Baustoff versiegelt ist, insbesondere mit einer Dichtungsfolie.

12. Verfahren zur Herstellung einer Windkraftanlagengründungsstruktur nach einem der vorangehenden Ansprüche bei dem
- on-shore eine Schalung aufgebaut wird, wobei sich ein Ringspalt in der Schalung von einer ersten Ende hin zu einem zweiten Ende verjüngt,
- die Schalung mit flüssigem Beton vergossen wird,
- der Beton ausgehärtet wird, so dass der ausgehärtete Beton ein Hohlstrukturelement bildet,
- das Hohlstrukturelement zu einem offshore Aufstellungsort verschifft wird und
- das Hohlstrukturelement an dem Aufstellungsort rammend oder vibrierend mit der im Einbauzustand unterseitigen Stirnfläche in den Meeresboden gegründet wird.

13. Verfahren nach Anspruch 12,
**dadurch gekennzeichnet,**
- **dass** der Beton in einem Autoklav ausgehärtet wird, insbesondere dass der Beton versiegelt wird.

14. Verfahren nach einem der vorangehenden Ansprüche 12-13
**dadurch gekennzeichnet,**
- **dass** die Wandung in Gleitschalung oder in Kletterschalung hergestellt wird.

15. Verfahren nach einem der vorangehenden Ansprüche 12-14
**dadurch gekennzeichnet,**
- **dass** das erste Ende der Schalung bodenseitig ist und das zweite Ende der Schalung oberseitig ist, dass das ausgetrocknete Hohlstrukturelement nach dem Aushärten um 180° gedreht wird und danach gegründet wird, insbesondere
- **dass** das Hohlstrukturelement aufrecht stehend zu dem offshore Aufstellungsort verschifft wird.

## Claims

1. A wind turbine foundation structure comprising:
a hollow structural element having a longitudinally extending circumferential wall, the wall being bounded at a top by a top end face and bounded at a bottom by a bottom end face,
wherein
the wall is formed from a mineral building material,
**characterized in that**
a wall thickness of the wall tapers from the upper end face, in the installed condition, toward the lower end face, in the installed condition.

2. The wind turbine foundation structure according to claim 1,
**characterized in that**
the hollow structural element is hollow cylindrical and/or
a wall thickness of the wall tapers continuously along at least a part of a longitudinal extension of the hollow structural element, or
a wall thickness of the wall tapers in steps along at least a part of a longitudinal extension of the hollow structural element.

3. The wind turbine foundation structure according to one of the preceding claims,
**characterized in that**
the inner diameter of the hollow structural element increases due to tapering and/or
the outer diameter decreases due to tapering.

4. The wind turbine foundation structure according to one of the preceding claims
**characterized in that** the building material contains at least in parts cement, and/or
the building material has a water/cement ratio of less than 0.45, in particular less than 0.,5 or less than 0.3, and/or
the building material has a strength class of at least C40/50, preferably C70/80, in particular C100/115 according to EN 206 and EN 1992, and/or
the building material has a pore content of less than 5%, preferably less than 3%, in particular less than 2%, and/or
the building material has a cement content of at least 350 kg/m³, preferably more than 450 kg/m³, in particular more than 550 kg/m³, in particular up to 600 kg/m³, and/or
in a mercury pressure porosimetric measurement, the building material has a porosity P_{28d} of less than 12 vol%, in particular less than 10 Vol% and P_{90d} of less than 10 vol%, in particular less than 8 Vol%.

5. The wind turbine foundation structure according to one of the preceding claims,
**characterized in that**
the wall is mechanically prestressed, in particular with a prestressing force of more than 5%, in particular more than 15% of a compressive strength of the wall, wherein the prestressing force is applied preferably lengthwise.

6. The wind turbine foundation structure according to one of the preceding claims,
**characterized in that**
the building material is metal-reinforced, and/or
the reinforcement has not less than 26 mm, preferably not less than 40 mm concrete cover, and/or
the building material is reinforced with ferritic stainless reinforcing steel having a chromium content which does not exceed 18 M%, and/or
the building material is reinforced with austenitic stainless reinforcing steel which contains at least 5%, in particular 8% to 14M% nickel and 12 M% to 22 M%, in particular 15%-20% chromium, and/or
the building material is reinforced with ferritic-austenitic stainless reinforcing steel which contains at least 18 M% chromium, and 2 M% to 8 M% nickel.

7. The wind turbine foundation structure according to one of the preceding claims,
**characterized in that**
the top end face is metallically reinforced, in particular wherein a metallic reinforcement projects out of the top end face,
in particular
wherein
a metallic reinforcement projects completely circumferentially out of the top end face and/or
the density of the reinforcement in an end region of the hollow structural element is greater at the top end and/or bottom end face than in a central region of the hollow structural element.

8. The wind turbine foundation structure according to one of the preceding claims,
**characterized in that**
an inner diameter of the wall in an end region of the hollow structural element increases, I n particular conically, towards the top end face.

9. The wind turbine foundation structure according to one of the preceding claims,
**characterized in that**
a radially inwardly pointing stop is formed on an inner lateral surface of the wall in an end region of the hollow structural element.

10. The wind turbine foundation structure according to one of the preceding claims,
**characterized in that**
a radially outwardly facing collar is formed on an outer lateral surface of the wall in an end region of the hollow structural element.

11. The wind turbine foundation structure according to one of the preceding claims,
**characterized in that**
the building material is sealed, in particular with a sealing foil.

12. A method of manufacturing a wind turbine foundation structure according to one of the preceding claims, the method comprising:
building up a formwork onshore, wherein an annular gap in the formwork tapers from a first end towards a second end,
pouring concrete into the annular gap in the formwork,
curing the concrete such that the cured concrete forms a hollow structural element,
shipping the hollow structural element to an offshore installation site, and
ramming or vibrating the hollow structural element with a lower end face, as seen in an installed condition, into a seabed at the installation site.

13. The method according to claim 12,
**characterized in that**
the concrete is cured in an autoclave, in particular that the concrete is sealed.

14. The method according to one of the preceding claims 12-13,
**characterized in that**
a wall of the hollow structural element is produced in a sliding formwork or in a climbing formwork.

15. The method according to one of the preceding claims 12-14,
**characterized in that**
the first end of the formwork is on a bottom side and the second end of the formwork is on a top side, that the cured hollow structural element is rotated by 180° after curing and is then founded, in particular that the hollow structural element is shipped to the offshore installation site in an upright position.

## Revendications

1. Structure de fondation d'éolienne comprenant :
un élément structurel creux ayant une paroi circonférentielle s'étendant longitudinalement, la paroi étant délimitée en haut par une face d'extrémité supérieure et délimitée en bas par une face d'extrémité inférieure,
dans laquelle
la paroi est formée à partir d'un matériau de construction minéral,
**caractérisée en ce que**
une épaisseur de paroi de la paroi se rétrécit à partir de la face d'extrémité supérieure, dans l'état installé, vers la face d'extrémité inférieure, dans l'état installé.

2. Structure de fondation d'éolienne selon la revendication 1,
**caractérisée en ce que**
l'élément structurel creux est cylindrique et creux et/ou
une épaisseur de paroi de la paroi se rétrécit en continu le long d'au moins une partie d'une extension longitudinale de l'élément structurel creux, ou
une épaisseur de paroi de la paroi se rétrécit par étapes le long d'au moins une partie d'une extension longitudinale de l'élément structurel creux.

3. Structure de fondation d'éolienne selon l'une des revendications précédentes,
**caractérisée en ce que**
le diamètre interne de l'élément structurel creux augmente en raison du rétrécissement et/ou
le diamètre externe diminue en raison du rétrécissement.

4. Structure de fondation d'éolienne selon l'une des revendications précédentes, **caractérisée en ce que** le matériau de construction contient au moins en partie du ciment, et/ou
le matériau de construction a un rapport eau/ciment de moins de 0,45, en particulier de moins de 0,5 ou de moins de à 0,3, et/ou
le matériau de construction a une classe de résistance d'au moins C40/50, de préférence C70/80, en particulier C100/115 selon EN 206 et EN 1992, et/ou
le matériau de construction a un contenu poreux de moins de 5 %, de préférence de moins de 3 %, en particulier de moins de 2 %, et/ou
le matériau de construction a un contenu en ciment d'au moins 350 kg/m³, de préférence supérieur à 450 kg/m³, en particulier supérieur à 550 kg/m³, en particulier jusqu'à 600 kg/m³, et/ou
dans une mesure porosimétrique de pression de mercure, le matériau de construction présente une porosité P_{28d} de moins de 12 % en volume, en particulier de moins de 10 % en volume et P_{90d} de moins de 10 % en volume, en particulier de moins de 8 % en volume.

5. Structure de fondation d'éolienne selon l'une des revendications précédentes, **caractérisée en ce que**
la paroi est précontrainte mécaniquement, en particulier avec une force de précontrainte de plus de 5 %, en particulier de plus de 15 % d'une résistance à la compression de la paroi, dans laquelle la force de précontrainte est appliquée de préférence dans le sens de la longueur.

6. Structure de fondation d'éolienne selon l'une des revendications précédentes, **caractérisée en ce que**
le matériau de construction est renforcé par des métaux, et/ou le renforcement n'a pas moins de 26 mm, de préférence pas moins de 40 mm de couverture en béton, et/ou
le matériau de construction est renforcé par de l'acier de renforcement inoxydable ferritique ayant un contenu en chrome qui ne dépasse pas 18 % de M, et/ou
le matériau de construction est renforcé par de l'acier de renforcement inoxydable austénitique qui contient au moins 5 %, en particulier 8. % à 14 % de M de nickel et 12 % de M à 22 % de M, en particulier 15 % - 20 % de chrome, et/ou
le matériau de construction est renforcé par de l'acier de renforcement inoxydable austénitique-ferritique qui contient au moins 18 % de M de chrome, et 2 % de M à 8 % de M de nickel.

7. Structure de fondation d'éolienne selon l'une des revendications précédentes,
**caractérisée en ce que**
la face d'extrémité supérieure est renforcée métalliquement, en particulier dans laquelle un renforcement métallique fait saillie hors de la face d'extrémité supérieure,
en particulier
dans laquelle
un renforcement métallique fait saillie complètement circonférentiellement hors de la face d'extrémité supérieure et/ou
la densité du renforcement dans une région d'extrémité de l'élément structurel creux est supérieure à la face d'extrémité inférieure et/ou d'extrémité supérieure que dans une région centrale de l'élément structurel creux.

8. Structure de fondation d'éolienne selon l'une des revendications précédentes,
**caractérisée en ce que**
un diamètre interne de la paroi dans une région d'extrémité de l'élément structurel creux augmente, en particulier de manière conique, vers la face d'extrémité supérieure.

9. Structure de fondation d'éolienne selon l'une des revendications précédentes,
**caractérisée en ce que**
une butée orientée radialement vers l'intérieur est formée sur une surface latérale interne de la paroi dans une région d'extrémité de l'élément structurel creux.

10. Structure de fondation d'éolienne selon l'une des revendications précédentes, **caractérisée en ce que**
un collier orienté radialement vers l'extérieur est formé sur une surface latérale externe de la paroi dans une région d'extrémité de l'élément structurel creux.

11. Structure de fondation d'éolienne selon l'une des revendications précédentes, **caractérisée en ce que**
le matériau de construction est rendu étanche, en particulier avec une feuille d'étanchéité.

12. Procédé de fabrication d'une structure de fondation d'éolienne selon l'une des revendications précédentes, le procédé comprenant :
la construction d'un coffrage à terre, dans lequel un espace annulaire dans le coffrage se rétrécit à partir d'une première extrémité vers une deuxième extrémité,
le versement du béton dans l'espace annulaire dans le coffrage,
le durcissement du béton de telle sorte que le béton durci forme un élément structurel creux,
l'expédition de l'élément structurel creux vers un site d'installation en mer, et
le pilonnage ou la vibration de l'élément de structurel creux avec une face d'extrémité inférieure, comme vu dans un état installé, dans un fond marin au niveau du site d'installation.

13. Procédé selon la revendication 12,
**caractérisé en ce que**
le béton est durci dans un autoclave, en particulier **en ce que** le béton est rendu étanche.

14. Procédé selon l'une des revendications précédentes 12-13,
**caractérisé en ce que**
une paroi de l'élément structurel creux est produite dans un coffrage coulissant ou dans un coffrage grimpant.

15. Procédé selon l'une des revendications précédentes 12 à 14,
**caractérisé en ce que**
la première extrémité du coffrage est sur un côté inférieur et la deuxième extrémité du coffrage est sur un côté supérieur, **en ce que** l'élément structurel creux durci est mis en rotation de 180° après le durcissement et est ensuite fondé, en particulier **en ce que** l'élément structurel creux est expédié vers le site d'installation en mer dans une position verticale.
